# EUROPEAN PATENT APPLICATION

(11) **EP 3 410 692 A1**
(43) Date of publication of application: **05.12.2018**
(21) Application number: 17773311.0
(22) Date of filing: 31.03.2017
(51) Int. Cl.: H04N 5/225, G03B 17/56, F16M 11/18

(54) **GROUND MOVING DEVICE, STABILIZER, MOUNT, AND ROBOT HEAD**

(30) Priority: 31.03.2016 CN 201620267964 U; 13.10.2016 CN 201621121138 U
(71) Applicant: Ninebot (Beijing) Tech Co., Ltd., Beijing 100192 (CN)
(72) Inventor: ZHANG, Guopeng, Haidian District, Beijing 100192 (CN); CHEN, Xingchi, Haidian District, Beijing 100192 (CN); DONG, Shiqian, Haidian District, Beijing 100192 (CN); PU, Li, Haidian District, Beijing 100192 (CN); SHEN, Bin, Haidian District, Beijing 100192 (CN); WANG, Ye, Haidian District, Beijing 100192 (CN)
(74) Representative: Regimbeau
(86) International application number: PCT/CN2017/079029
(87) International publication number: WO 2017/167281

(57) **Abstract**

Provided in the present invention is a ground moving device. The device comprises a stabilizer and a stabilizer-carrying assembly, and the stabilizer is disposed on the carrying assembly. The stabilizer comprises: a fastening frame having a first connection portion connected to a first connection portion of the carrying assembly; and a mount having a first connection portion connected to a second portion of the fastening frame. In this way, when filming during motion is desired, a photographer simply needs to fasten an image capturing device to the mount, and focuses on controlling the ground moving device to move forward or backward or rotate to achieve filming during motion, such that safety of the photographer and image quality are ensured. In addition, when photographers desire to film themselves, the present invention enables them to track and film themselves by means of employing a hand-held controller to remotely control the ground moving device to move forward or backward or rotate, or by means of remotely controlling a mount to perform a roll, pitch, or yaw movement. The present invention further provides a mount and a robot head.

## Description

### TECHNICAL FIELD

The present disclosure relates to the technical field of filming technologies, and particularly to a device moving on ground, stabilizer, cloud platform and robot head.

### BACKGROUND

Recently, filming during motion is getting more and more popular among photographers because of the abundant plentiful telepresence of images captured by means of filming during motion.

In the related art, filming during motion is generally implemented by two ways. In a first way, filming is performed by a photographer using a hand-held video camera while the photographer is walking. In a second way, filming during motion is performed by a photographer by means of a device moving on ground. However, the following problems are found in these two ways.

Firstly, when filming is performed by a photographer in the first way, tremble of hands of a photographer during filming will result in blurry images captured, and stability of filming is poorly controllable.

Secondly, when filming is performed by a photographer in the second way, a photographer performs controlling of a device moving on ground and filming simultaneously, the fact that the controlling and filming are performed simultaneously may cause some safety problems.

Thirdly, when a photographer wants to film himself/herself, the photographer can perform a close-ranged filming but cannot perform a remote filming, regardless of whether the photographer performs filming in the first way or the second way.

### SUMMARY

In view of the above problems, the present disclosure is proposed to provide a device moving on ground, a stabilizer, a cloud platform, and a robot head, which can solve the above problems or at least partially solve the above problems.

An embodiment of the present disclosure provides a device moving on ground, including a stabilizer-carrying assembly and a stabilizer disposed on the stabilizer-carrying assembly, the stabilizer including:
a fixing support having a first connection portion connected to a first connection portion of the stabilizer-carrying assembly; and
a cloud platform having a first connection portion connected to a second connection portion of the fixing support.

In an implementation, the stabilizer further includes:
an image capturing device disposed at a second connection portion of the cloud platform.

In an implementation, the stabilizer further includes:
a wireless communication device disposed at a third connection portion of the fixing support.

In an implementation, the wireless communication device includes a signal transmitter and a signal receiver.

In an implementation, the stabilizer further includes:
an electric motor coupled to the wireless communication device.

In an implementation, the wireless communication device includes an ultra wide band (UWB) device.

In an implementation, the stabilizer-carrying assembly functions as a movement control component for the device moving on ground, and the movement control component is a control component for controlling movement of the device moving on ground.

In an implementation, the movement control component is a steering joystick, which is a control component for controlling steering of the device moving on ground.

In an implementation, the steering joystick is a joystick which is controllable by a leg or a joystick which is controllable by a hand.

Another embodiment of the present disclosure provides a stabilizer, the stabilizer is applied to a device moving on ground with a stabilizer-carrying assembly, and the stabilizer is disposed on the stabilizer-carrying assembly, the stabilizer including:
a fixing support having a first connection portion connected to a first connection portion of the stabilizer-carrying assembly; and
a cloud platform having a first connection portion connected to a second connection portion of the fixing support.

Yet another embodiment of the present disclosure provides a cloud platform. the cloud platform includes a base, a pitch rotation mechanism, a roll rotation mechanism and a yaw rotation mechanism.

The yaw rotation mechanism is disposed on the base.

The roll rotation mechanism is connected to the yaw rotation mechanism via the pitch rotation mechanism.

Here, when the yaw rotation mechanism rotates in a yaw direction, the yaw rotation mechanism will actuate the pitch rotation mechanism and the roll rotation mechanism to rotate in the yaw direction, and when the pitch rotation mechanism rotates in a pitch direction, the pitch rotation mechanism will actuate the roll rotation mechanism to rotate in the pitch direction, and the roll rotation mechanism is rotatable in a roll direction relative to the pitch rotation mechanism.

In an implementation, the yaw rotation mechanism includes a yaw support and a yaw axle.

The yaw support is connected to the base via the yaw axle, and the yaw axle functions as a rotation axle of the yaw support when the yaw support rotates in the yaw direction.

The pitch rotation mechanism is disposed on the yaw support.

In an implementation, the yaw support includes a first connection portion, a second connection portion, and a third connection portion.

The first connection portion is connected to the yaw axle.

The second connection portion is connected to one end of the first connection portion and the third connection portion is connected to the other end of the first connection portion, and the second connection portion and the third connection portion are located on a same side of the first connection portion, so as to form a pitch space for accommodating the pitch rotation mechanism, and the pitch rotation mechanism is disposed in the pitch space.

In an implementation, the pitch rotation mechanism includes a pitch support and a pitch axle.

The pitch axle is disposed on the yaw rotation mechanism and is perpendicular to a plane in which the pitch direction is.

The pitch support is connected to the pitch axle, and the pitch axle functions as a rotation axle of the pitch support when the pitch support rotates in the pitch direction.

The roll rotation mechanism is disposed on the pitch support.

In an implementation, the pitch rotation mechanism includes two pitch axles.

One of the two pitch axles is disposed at one end of the pitch support and other one of the two pitch axels is disposed at other end of the pitch support.

The pitch support is connected to the yaw rotation mechanism via the two pitch axles.

In an implementation, the roll rotation mechanism includes a roll support and a roll axle.

The roll axle is connected to the roll support, and the pitch rotation mechanism is clamped by the roll support, the roll axle is rotatable in a roll direction relative to the roll support.

In an implementation, the roll support includes a first clamping portion, a second clamping portion and a fourth connection portion.

The first clamping portion is connected to the second clamping portion via the fourth connection portion, and the first clamping portion and the second clamping portion are located on a same side of the fourth connection portion.

The first clamping portion and the second clamping portion cooperate to clamp the pitch rotation mechanism.

The roll axle is disposed on the fourth connection portion.

In an implementation, a first operation device including a display screen is disposed on the pitch rotation mechanism.

In an implementation, a second operation device including an image capturing device is disposed on the roll rotation mechanism.

Still another embodiment of the present disclosure provides a robot head, including: the cloud platform of the above embodiment.

Provided in the present disclosure is a device moving on ground. The device includes a stabilizer and a stabilizer-carrying assembly, and the stabilizer is disposed on the carrying assembly. The stabilizer includes a fixing support having a first connection portion connected to a first connection portion of the carrying assembly; and a cloud platform having a first connection portion connected to a second portion of the fixing support. In this way, when filming during motion is desired, a photographer simply needs to fasten an image capturing device to the cloud platform, and focuses on controlling the device moving on ground to move forward or backward or rotate to achieve filming during motion, such that safety of the photographer and image quality are ensured. In addition, when photographers desire to film themselves, the present disclosure enables them to track and film themselves by means of employing a hand-held controller to remotely control the device moving on ground to move forward or backward or rotate, or by means of remotely controlling a cloud platform to perform a roll, pitch, or yaw movement. The present disclosure further provides a cloud platform and a robot head.

The cloud platform according to the present disclosure includes a base, a pitch rotation mechanism, a roll rotation mechanism and a yaw rotation mechanism. The yaw rotation mechanism is disposed on the base. Due to connection of the pitch rotation mechanism to the yaw rotation mechanism by the roll rotation mechanism, when the yaw rotation mechanism rotates in a yaw direction, the yaw rotation mechanism actuates the pitch rotation mechanism and the roll rotation mechanism to rotate in the yaw direction; when the pitch rotation mechanism rotates in a pitch direction, the pitch rotation mechanism actuates the roll rotation mechanism to rotate in the pitch direction, the roll rotation mechanism is rotatable in a roll direction relative to the pitch rotation mechanism. As such, independent rolling of the roll rotation mechanism is implemented, that is to say, when rotating in the roll direction, the roll rotation mechanism will not actuate the pitch rotation mechanism to rotate, and also will not actuate the yaw rotation mechanism to rotate.

### BRIEF DESCRIPTION OF DRAWINGS

Other advantages and benefits of the present disclosure will become apparent for those skilled in the art by reading the following detailed description of preferred embodiments. Drawings of the embodiments are only for the purpose of illustrating the preferred embodiments, and in no ways to limit the present disclosure. In the drawings:
FIG. 1 is an overall structural schematic diagram of a device moving on ground according to a first embodiment of the disclosure;
FIG. 2 is an overall structural schematic diagram of a stabilizer according to the first embodiment of the disclosure;
FIG. 3 is an overall structural schematic diagram of a device moving on ground, which is a balance vehicle, according to a third embodiment of the disclosure; and
FIG. 4 is a structural schematic diagram of a cloud platform according to embodiments of the disclosure.

In the drawings, 1- device moving on ground; 2- stabilizer-carrying assembly; 3- fixing support; 4- cloud platform; 5- image capturing device; 6- wireless communication device; 7- electric motor; 8- detection circuit board; 21- signal transmitter; 22- signal receiver;

41- base; 42- yaw axle; 43- yaw support; 31- first connection portion; 32-second connection portion; 33- third connection portion; 44- pitch axle; 45- pitch support; 46- roll axle; 47- roll support; 71- first clamping portion; 72- second clamping portion; and 73- fourth connection portion.

### DETAILED DESCRIPTION

The exemplary embodiments of the present disclosure will be further described in detail below with reference to drawings. It should be understood that the present disclosure can be implemented in various forms rather than being limited to the embodiments illustrated herein, although the drawings illustrate the exemplary embodiments of the present disclosure. Actually, these embodiments are provided for a more thorough understanding of the present disclosure and for a full conveying of scope of the present disclosure to those skilled in the art.

In order to guarantee quality of images and safety of a photographer simultaneously during filming in motion, a device moving on ground is proposed in the present disclosure. The device includes a stabilizer and a stabilizer-carrying assembly. The stabilizer is disposed on the stabilizer-carrying assembly. The stabilizer includes a fixing support and a cloud platform. A first connection portion of the fixing support is connected to a first connection portion of the stabilizer-carrying assembly. A first connection portion of the cloud platform is connected to a second connection portion of the fixing support.

The technical solution of the present disclosure will be further described in detail with reference to drawings and detailed embodiments.

### FIRST EMBODIMENT

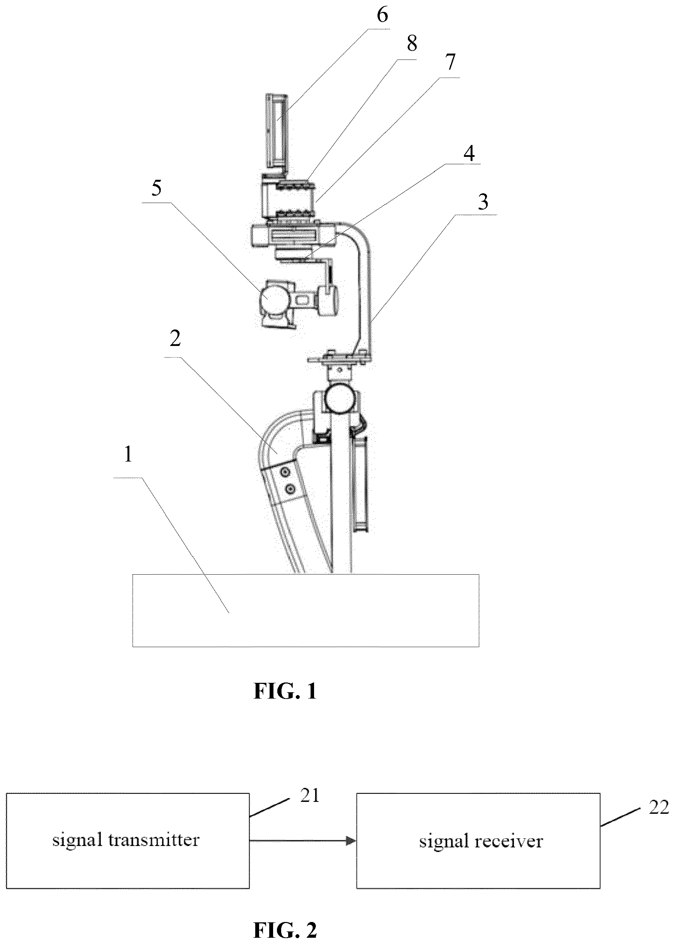

The present embodiment provides a device moving on ground. The device moving on ground may be a balance vehicle, an electric toy car or the like. The device moving on ground may include a stabilizer and a stabilizer-carrying assembly 2, as illustrated in FIG. 1. The stabilizer is disposed on the stabilizer-carrying assembly 2.

Specifically, the stabilizer includes a fixing support 3, a cloud platform 4, and an image capturing device 5.

Here, a first connection portion of the fixing support 3 is connected to a first connection portion of the stabilizer-carrying assembly 2. A first connection portion of the cloud platform 4 is connected to a second connection portion of the fixing support 3. The cloud platform 4 is fixed on the fixing support 3. Here, the cloud platform 4 can perform rotations in three directions of roll, pitch and yaw.

Here, the stabilizer-carrying assembly 2 may function as a movement control component of the device 1 moving on ground. The movement control component is a control component for controlling movement of the device 1 moving on ground. Specifically, the movement control component may be a steering joystick. The steering joystick functions as a control component for controlling steering of the device 1 moving on ground. When the device 1 moving on ground is a balance vehicle, the steering joystick may be a joystick which is controllable by a leg or a joystick which is controllable by a hand. Certainly, the stabilizer-carrying assembly 2 may only function as a stabilizer carrier rather than the movement control component of the device 1 moving on ground, or the stabilizer-carrying assembly 2 may have additional functions, and is not specifically limited in the present disclosure.

The image capturing device 5 is disposed on a second connection portion of the cloud platform 4 and used for capturing images during filming in motion. The image capturing device 5 may include a video camera, a digital camera, a smartphone and/or the like.

Here, the stabilizer further includes a wireless communication device 6, an electric motor 7 and a detection circuit board 8.

Here, the wireless communication device 6 may be disposed either on a third connection portion of the fixing support 3 or on a third connection portion of the cloud platform 4. When the wireless communication device 6 is disposed on the cloud platform 4, the overall control is complex due to the rotatable cloud platform 4. Thus, the wireless communication device 6 according to the embodiment is disposed on the third connection portion of the fixing support 3.

Here, a first port of the wireless communication device 6 is coupled to the electric motor 7, a second port of the wireless communication device 6 is coupled to the detection circuit board 8, a third port of the wireless communication device 6 is coupled to the cloud platform 4, and a fourth port of the wireless communication device 6 is coupled to a main control board disposed in a chassis of the device 1 moving on ground. The detection circuit board 8 is disposed between the wireless communication device 6 and the electric motor 7. After determination of position of a photographer by the wireless communication device 6 according to signals received, a first control signal is transmitted to the electric motor 7 via the first port. The electric motor 7 actuates the wireless communication device 6 to rotate according to the first control signal, so that the wireless communication device 6 rotates to face to the photographer. Here, the first port of the wireless communication device 6 is a first signal output port, the second port of the wireless communication device 6 is a first signal input port, the third port of the wireless communication device 6 is a second signal output port, and the fourth port of the wireless communication device 6 is a third signal output port. The wireless communication device 6 may include an ultra wide band (UWB) unit.

Specifically, as illustrated in FIG. 2, the wireless communication device 6 includes a signal transmitter 21 and a signal receiver 22. Here, when a position of a photographer is to be determined by the wireless communication device 6 such that a photographer can be filmed remotely, the signal transmitter 21 transmits an interrogating signal to the detection circuit board 8. The detection circuit board 8 filters the interrogating signal to remove clutter, in order to acquire an effective signal. The effective signal is transmitted to a remote control. The remote control transmits a response signal to the signal receiver 22 according to the effective signal. After the response signal is received by the signal receiver 22, the position of the remote control is determined by the wireless communication device 6 according to the response signal, such that the position of a photographer can be determined.

After the wireless communication device 6 rotates to face to the photographer, the wireless communication device 6 also transmits a second control signal to the cloud platform 4 via the third port to control the cloud platform 4 to rotate to face to the photographer. In such a way, the image capturing device 5 can face to the photographer to film photographer remotely. Alternatively, the wireless communication device 6 transmits a third control signal to the device 1 moving on ground via the fourth port, to control the device 1 moving on ground to rotate to face to the photographer, so as to actuate the image capturing device 5 to face to the photographer to film the photographer remotely.

In a practical application, when a photographer wants to film himself/herself remotely by controlling the wireless communication device 6, a remote filming can be implemented according to the method as described above.

When a photographer wants to film during motion, he/she can focus on controlling the device 1 moving on ground to move forward, backward or rotate, such that the image capturing device 5 can capture images in various directions stably.

Certainly, the photographer also can implement an image capturing in various directions or a remote tracking filming of the photographer himself/herself by remotely control either the cloud platform 4 or the device 1 moving on ground.

Specifically, when a photographer wants to implement an image capturing by controlling the cloud platform 4, a fourth control signal, a fifth control signal or a sixth control signal can be transmitted to the cloud platform 4 by the remote control. The cloud platform 4 can roll according to the fourth control signal, or pitch according to the fifth control signal, or yaw according to the sixth control signal. Then the image capturing device 5 can capture images in various directions as the rolling, pitching or yawing of the cloud platform 4. Here, the fourth control signal is a signal for controlling the cloud platform 4 to roll, and a rolling angle can be 360°. The fifth control signal specifically is a signal for controlling the cloud platform 4 to pitch, and a pitching angle can be -130° to +50°. The sixth control signal specifically is a signal for controlling the cloud platform 4 to yaw, and a yawing angle can be ±45°.

When a photographer wants to implement image capturing or remote tracking filming of himself/herself by controlling the device 1 moving on ground, a seventh control signal, an eighth control signal, a ninth control signal, a tenth control signal, or an eleventh control signal can be transmitted to the device 1 moving on ground by the remote control. The device 1 moving on ground can move forward according to the seventh control signal, or move backward according to the eighth control signal, or move to the left according to the ninth control signal, or move to the right according to the tenth control signal, or rotate according to the eleventh control signal. Then the image capturing device 5 can capture images in various directions as the forward movement, backward movement, left movement, right movement and rotation of the device 1 moving on ground respectively, or film himself/herself remotely in various directions. Here, a rotation angle of the device 1 moving on ground can be 360°.

When a photographer films during motion with the device 1 moving on ground according to the present embodiment, he/she only needs to focus on controlling the device 1 moving on ground to move in various directions, such that the image capturing device 5 can capture images in various directions stably. On one hand, stability of image capturing can be assured, and on the other hand, safety of the photographer can be assured. In addition, the photographer may control the device 1 moving on ground, the cloud platform 4 or the wireless communication device 6 to move or rotate remotely by a remote control, to actuate the image capturing device 5 to move or rotate. In such a way, an image capturing in various directions or a remote filming of the photographer himself/herself can be implemented.

### SECOND EMBODIMENT

With respect to the first embodiment, the present embodiment proposes a stabilizer. The stabilizer is applied to the device 1 moving on ground according to first embodiment. As illustrated in FIG. 1, the stabilizer 1 includes a fixing support 3, a cloud platform 4, and an image capturing device 5. The device 1 moving on ground includes a stabilizer-carrying assembly 2. The stabilizer is disposed on the stabilizer-carrying assembly 2.

Specifically, a first connection portion of the fixing support 3 is connected to a first connection portion of the stabilizer-carrying assembly 2. A first connection portion of the cloud platform 4 is connected to a second connection portion of the fixing support 3. The cloud platform 4 is fixed on the fixing support 3. Here, the cloud platform 4 can perform rotations in three directions of roll, pitch and yaw.

Here, the stabilizer-carrying assembly 2 may function as a movement control component of the device 1 moving on ground. The movement control component is a control component for controlling movement of the device 1 moving on ground. Specifically, the movement control component may be a steering joystick. The steering joystick functions as a control component for controlling steering of the device 1 moving on ground. The steering joystick may be a joystick which is controllable by a leg or a joystick which is controllable by a hand.

The image capturing device 5 is disposed on a second connection portion of the cloud platform 4 and used for capturing images during filming in motion. The image capturing device 5 may include a video camera, a digital camera a smartphone and/or the like.

Here, the stabilizer further includes a wireless communication device 6, an electric motor 7 and a detection circuit board 8.

The wireless communication device 6 can be disposed either on a third connection portion of the fixing support 3 or on a third connection portion of the cloud platform 4. When the wireless communication device 6 is disposed on the cloud platform 4, the overall control is complex due to the rotatable cloud platform 4. Thus, the wireless communication device 6 in the present embodiment is disposed on the third connection portion of the fixing support 3.

Here, a first port of the wireless communication device 6 is coupled to the electric motor 7, a second port of the wireless communication device 6 is coupled to the detection circuit board 8, a third port of the wireless communication device 6 is coupled to the cloud platform 4, and a fourth port of the wireless communication device 6 is coupled to a main control board disposed in a chassis of the device 1 moving on ground. The detection circuit board 8 is disposed between the wireless communication device 6 and the electric motor 7. After determination of the position of a photographer by the wireless communication device 6 according to signals received, a first control signal is transmitted to the electric motor 7. The electric motor 7 actuates the wireless communication device 6 to rotate according to the first control signal, so that the wireless communication device 6 rotates to face to the photographer. The wireless communication device 6 may include a UWB unit.

Specifically, as illustrated in FIG. 2, the wireless communication device 6 includes a signal transmitter 21 and a signal receiver 22. Here, when a position of a photographer is to be determined by the wireless communication device 6 such that a photographer can be filmed remotely, the signal transmitter 21 transmits an interrogating signal to the detection circuit board 8. The detection circuit board 8 filters the interrogating signal to remove clutter, in order to acquire an effective signal. Then the effective signal is transmitted to a remote control. The remote control transmits a response signal to the signal receiver 22 according to the effective signal. After the response signal is received by the signal receiver 22, the position of the remote control is determined by the wireless communication device 6 according to the response signal, such that the position of a photographer can be determined.

After the wireless communication device 6 rotates to face to the photographer, the wireless communication device 6 also transmits a second control signal to the cloud platform 4 via the third port, to control the cloud platform 4 to rotate to face to the photographer. In such a way, the image capturing device 5 can face to the photographer to film photographer remotely. Alternatively, the wireless communication device 6 transmits a third control signal to the device 1 moving on ground via the fourth port, to control the device 1 moving on ground to rotate to face to the photographer, so as to actuate the image capturing device 5 to face to the photographer to film photographer remotely. Here, the first port of the wireless communication device 6 is a first signal output port, the second port of the wireless communication device 6 is a first signal input port, the third port of the wireless communication device 6 is a second signal output port, and the fourth port of the wireless communication device 6 is a third signal output port.

In a practical application, when a photographer wants to film himself/herself remotely by controlling the wireless communication device 6, a remote filming can be implemented according to the method as described above.

When a photographer wants to film during motion, he/she can focus on controlling the device 1 moving on ground to move forward, backward or rotate, such that the image capturing device 5 can capture images in various directions stably.

Certainly, a photographer also can implement an image capturing in various directions or a remote tracking filming of the photographer himself/herself by remotely control the cloud platform 4 or the device 1 moving on ground.

Specifically, when a photographer wants to implement an image capturing by controlling the cloud platform 4, a fourth control signal, a fifth control signal or a sixth control signal can be transmitted to the cloud platform 4 by the remote control. The cloud platform 4 can roll according to the fourth control signal, or pitch according to the fifth control signal, or yaw according to the sixth control signal. Then the image capturing device 5 can capture images in various directions or film the photographer himself/herself remotely in various directions as the roll, pitch or yaw of the cloud platform 4. Here, the fourth control signal is a signal for controlling the cloud platform 4 to roll, and a rolling angle can be 360°. The fifth control signal specifically is a signal for controlling the cloud platform 4 to pitch, and a pitching angle can be -130° to +50°. The sixth control signal specifically is a signal for controlling the cloud platform 4 to yaw, and a yawing angle can be ±45°.

When a photographer wants to implement image capturing or remote tracking filming of himself/herself by controlling the device 1 moving on ground, a seventh control signal, an eighth control signal, a ninth control signal, a tenth control signal, or an eleventh control signal can be transmitted to the device 1 moving on ground by the remote control. The device 1 moving on ground can move forward according to the seventh control signal, or move backward according to the eighth control signal, or move to the left according to the ninth control signal, or move to the right according to the tenth control signal, or rotate according to the eleventh control signal; then the image capturing device 5 can capture images in various directions as the forward movement, backward movement, left movement, right movement and rotation of the device 1 moving on ground respectively, or film himself/herself remotely in various directions. Here, a rotation angle of the device 1 moving on ground can be 360°.

The stabilizer according to the present embodiment is fixed on the device 1 moving on ground. When a photographer films during motion with the device 1 moving on ground, he/she only needs to focus on controlling the device 1 moving on ground to move in various directions, such that that the image capturing device can capture images in various directions stably. On one hand, stability of image capturing can be assured, and on the other hand, safety of a photographer can be assured. In addition, photographer may control the device 1 moving on ground, the cloud platform 4 or the wireless communication device 6 to move or rotate remotely by a remote control, to actuate the image capturing device 5 to move or rotate. In such a way, an image capturing in various directions or a remote filming of the photographer himself/herself can be implemented.

### THIRD EMBODIMENT

With respect to the first embodiment, when the device 1 moving on ground according to first embodiment is a balance vehicle and filming during motion is implemented with the balance vehicle, the specific implementation is as follows.

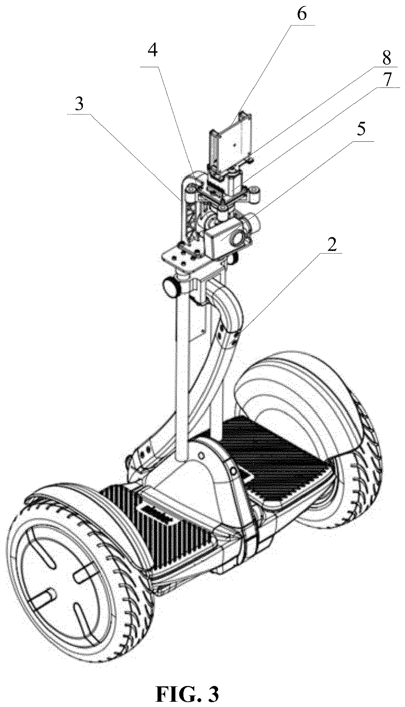

As illustrated in FIG. 3, the stabilizer is fixed on the balance vehicle to film during motion. The stabilizer includes a fixing support 3, a cloud platform 4, and an image capturing device 5. The balance vehicle includes a stabilizer-carrying assembly 2, and the stabilizer is disposed on the stabilizer-carrying assembly 2.

Here, the stabilizer-carrying assembly 2 may function as a movement control component of the balance vehicle. The movement control component is a control component for controlling movement of the balance vehicle. Specifically, the movement control component may be a steering joystick of the balance vehicle. The steering joystick functions as a control component for controlling steering of the balance vehicle. Specifically, the steering joystick may include a joystick which is controllable by a leg or a joystick which is controllable by a hand. The stabilizer-carrying assembly 2 illustrated in FIG. 3 is a joystick, which is controllable by a leg, of the balance vehicle.

Specifically, a first connection portion of the fixing support 3 is connected to a first connection portion of the stabilizer-carrying assembly 2. A first connection portion of the cloud platform 4 is connected to a second connection portion of the fixing support 3, and the cloud platform 4 is fixed on the fixing support 3. Here, the cloud platform 4 can perform rotations in three directions of roll, pitch and yaw.

The image capturing device 5 is disposed on a second connection portion of the cloud platform 4 and used for capturing images during filming in motion. Specifically, the image capturing device 5 in the present embodiment is a digital camera.

Here, the stabilizer further includes a wireless communication device 6, an electric motor 7 and a detection circuit board 8.

The wireless communication device 6 can be disposed either on a third connection portion of the fixing support 3 or on a third connection portion of the cloud platform 4. When the wireless communication device 6 is disposed on the cloud platform 4, the overall control is complex due to the rotatable cloud platform 4. Thus, the wireless communication device 6 in the present embodiment is disposed on the third connection portion of the fixing support 3.

Here, a first port of the wireless communication device 6 is coupled to the electric motor 7, a second port of the wireless communication device 6 is coupled to the detection circuit board 8, a third port of the wireless communication device 6 is coupled to the cloud platform 4, and a fourth port of the wireless communication device 6 is coupled to a main control board of a chassis of the balance vehicle. The detection circuit board 8 is disposed between the wireless communication device 6 and the electric motor 7. After determination of the position of a photographer by the wireless communication device 6 according to signals received, a first control signal is transmitted to the electric motor 7 via the first port. The electric motor 7 actuates the wireless communication device 6 to rotate according to the first control signal, so that the wireless communication device 6 rotates to face to the photographer. Here, the first port of the wireless communication device 6 is a first signal output port, the second port of the wireless communication device 6 is a first signal input port, the third port of the wireless communication device 6 is a second signal output port, and the fourth port of the wireless communication device 6 is a third signal output port. The wireless communication device 6 may include a UWB unit.

Specifically, as illustrated in FIG. 2, the wireless communication device 6 includes a signal transmitter 21 and a signal receiver 22. When a position of a photographer is to be determined by the wireless communication device 6 such that the photographer can be filmed remotely, the signal transmitter 21 transmits an interrogating signal to the detection circuit board 8. The detection circuit board 8 filters the interrogating signal to remove clutter, in order to acquire an effective signal. Then the effective signal is transmitted to a remote control. The remote control transmits a response signal to the signal receiver 22 according to the effective signal. After the response signal is received by the signal receiver 22, the position of the remote control is determined by the wireless communication device 6 according to the response signal, and the position of a photographer is determined.

After the wireless communication device 6 rotates to face to the photographer, the wireless communication device 6 also transmits a second control signal to the cloud platform 4 via the third port, to control the cloud platform 4 to rotate to face to the photographer, such that the digital camera can face to the photographer to film the photographer remotely. Alternatively, the wireless communication device 6 transmits a third control signal to the balance vehicle via the fourth port to control the balance vehicle to rotate to face to the photographer, and to actuate the digital camera to face to the photographer for filming the photographer remotely.

When a photographer wants to film himself/herself remotely by controlling the wireless communication device 6, a remote filming can be implemented according to the method as described above.

When a photographer wants to film during motion, he/she can focus on controlling the balance vehicle to move forward, backward or rotate, such that the digital camera can capture images in various directions stably.

Certainly, a photographer also can implement an image capturing in various directions or a remote tracking filming of the photographer himself/herself by remotely control the cloud platform 4 or the balance vehicle.

Specifically, when a photographer wants to implement an image capturing or a remote tracking filming of himself/herself by controlling the cloud platform 4, a fourth control signal, a fifth control signal or a sixth control signal can be transmitted to the cloud platform 4 by the remote control. The cloud platform 4 can roll according to the fourth control signal, or pitch according to the fifth control signal, or yaw according to the sixth control signal. Then the digital camera can capture images in various directions as the roll, pitch or yaw of the cloud platform 4 respectively. Here, the fourth control signal is a signal for controlling the cloud platform 4 to roll, and a rolling angle can be 360°. The fifth control signal specifically is a signal for controlling the cloud platform 4 to pitch, and a pitching angle can be -130° to +50°. The sixth control signal specifically is a signal for controlling the cloud platform 4 to yaw, and a yawing angle can be ±45°.

When a photographer wants to implement image capturing or remote tracking filming of himself/herself by controlling the balance vehicle, a seventh control signal, an eighth control signal, a ninth control signal, a tenth control signal, or an eleventh control signal can be transmitted to the balance vehicle by the remote control. The balance vehicle can move forward according to the seventh control signal, or move backward according to the eighth control signal, or move to the left according to the ninth control signal, or move to the right according to the tenth control signal, or rotate according to the eleventh control signal. Then the digital camera can capture images in various directions as the forward movement, backward movement, left movement, right movement and rotation of the balance vehicle respectively, or film himself/herself remotely in various directions. Here, a rotation angle of the balance vehicle can be 360°.

The balance vehicle according to the present embodiment is provided with a stabilizer. When a photographer films during motion with the balance vehicle, he/she only needs to focus on controlling the balance vehicle to move in various directions, such that the digital camera can capture images in various directions stably. On one hand, stability of image capturing can be assured, and on the other hand, safety of a photographer can be assured. In addition, photographer may control the chassis of the balance vehicle, the cloud platform 4 or the wireless communication device 6 to move or rotate remotely by a remote control, to actuate the digital camera to move or rotate. In such a way, an image capturing in various directions or a remote filming of the photographer himself/herself can be implemented.

### FOURTH EMBODIMENT

With respect to the first embodiment, when the device 1 moving on ground according to first embodiment is an electric toy car, the stabilizer can be applied to the electric toy car to film during motion, the specific implementation is as follows.

The stabilizer is disposed on the stabilizer-carrying assembly 2. The stabilizer includes a fixing support 3, a cloud platform 4, and an image capturing device 5. The stabilizer-carrying assembly 2 functions as a movement control component of the electric toy car. The movement control component is a control component for controlling movement of the electric toy car. Specifically, the movement control component may be a steering joystick of the electric toy car. The steering joystick functions as a control component for controlling steering of the electric toy car. Specifically, the steering joystick may include a joystick used as a steering wheel.

Specifically, a first connection portion of the fixing support 3 is connected to a first connection portion of the stabilizer-carrying assembly 2. A first connection portion of the cloud platform 4 is connected to a second connection portion of the fixing support 3. The cloud platform 4 is fixed on the fixing support 3. Here, the cloud platform 4 can perform rotations in three directions of roll, pitch and yaw.

The image capturing device 5 is disposed on a second connection portion of the cloud platform 4 and used for capturing images during filming in motion. Specifically, the image capturing device 5 in the present embodiment is a smartphone.

Here, the stabilizer further includes a wireless communication device 6, an electric motor 7 and a detection circuit board 8.

The wireless communication device 6 can be disposed either on a third connection portion of the fixing support 3 or on the second connection portion of the cloud platform 4. When the wireless communication device 6 is disposed on the cloud platform 4, the overall control is complex due to the rotatable cloud platform 4. Thus, the wireless communication device 6 in the present embodiment is disposed on the third connection portion of the fixing support 3.

Here, a first port of the wireless communication device 6 is coupled to the electric motor 7, a second port of the wireless communication device 6 is coupled to the detection circuit board 8, a third port of the wireless communication device 6 is coupled to the cloud platform 4, and a fourth port of the wireless communication device 6 is coupled to a main control board of a chassis of the electric toy car. The detection circuit board 8 is disposed between the wireless communication device 6 and the electric motor 7. After determination of the position of a photographer by the wireless communication device 6 according to signals received, a first control signal is transmitted to the electric motor 7 via the first port. The electric motor 7 actuates the wireless communication device 6 to rotate according to the first control signal, so that the wireless communication device 6 rotates to face to the photographer. Here, the first port of the wireless communication device 6 is a first signal output port, the second port of the wireless communication device 6 is a first signal input port; the third port of the wireless communication device 6 is a second signal output port, and the fourth port of the wireless communication device 6 is a third signal output port; the wireless communication device 6 may include a UWB unit.

Specifically, as illustrated in FIG. 2, the wireless communication device 6 includes a signal transmitter 21 and a signal receiver 22. When a position of a photographer is to be determined by the wireless communication device 6 such that the photographer can be filmed remotely, the signal transmitter 21 transmits an interrogating signal to the detection circuit board 8. The detection circuit board 8 filters the interrogating signal to remove clutter, in order to acquire an effective signal. Then the effective signal is transmitted to a remote control. The remote control transmits a response signal to the signal receiver 22 according to the effective signal. After the response signal is received by the signal receiver 22, the position of the remote control is determined by the wireless communication device 6 according to the response signal, such that the position of a photographer can be determined.

After the wireless communication device 6 rotates to face to the photographer, the wireless communication device 6 also transmits a second control signal to the cloud platform 4 via the third port to control the cloud platform 4 to rotate to face to the photographer, such that the smartphone is brought into facing to the photographer and the photographer can be filmed remotely. Alternatively, the wireless communication device 6 transmits a third control signal to the electric toy car via the fourth port to control the electric toy car to rotate to face to the photographer, such that the smartphone can be actuated to face to the photographer and the photographer can be filmed remotely.

When a photographer wants to film himself/herself remotely by controlling the wireless communication device 6, a remote filming can be implemented according to the method as described above.

When a photographer wants to film during motion, he/she can focus on controlling the electric toy car to move forward, backward or rotate, that the smartphone can capture images in various directions stably.

Certainly, a photographer also can implement an image capturing in various directions or a remote tracking filming of himself/herself by remotely control the cloud platform 4 or the electric toy car.

Specifically, when a photographer wants to implement an image capturing or a remote tracking filming of himself/herself by controlling the cloud platform 4, a fourth control signal, a fifth control signal or a sixth control signal can be transmitted to the cloud platform 4 by the remote control. The cloud platform 4 can roll according to the fourth control signal, or pitch according to the fifth control signal, or yaw according to the sixth control signal. Then the digital camera can capture images in various directions or film a photographer himself/herself remotely in various directions as the roll, pitch or yaw of the cloud platform 4. Here, the fourth control signal is a signal for controlling the cloud platform 4 to roll, and a rolling angle can be 360°. The fifth control signal specifically is a signal for controlling the cloud platform 4 to pitch, and a pitching angle can be -130° to +50°. The sixth control signal specifically is a signal for controlling the cloud platform 4 to yaw, and a yawing angle can be ±45°.

When a photographer wants to implement image capturing or remote tracking filming of himself/herself by controlling the electric toy car, a seventh control signal, an eighth control signal, a ninth control signal, a tenth control signal, or an eleventh control signal can be transmitted to the electric toy car by the remote control. The electric toy car can move forward according to the seventh control signal, or move backward according to the eighth control signal, or move to the left according to the ninth control signal, or move to the right according to the tenth control signal, or rotate according to the eleventh control signal. Then the smartphone can capture images in various directions as the forward movement, backward movement, left movement, right movement and rotation of the balance car, or film the photographer himself/herself remotely in various directions. Here, a rotation angle of the electric toy car can be 360°.

The electric toy car according to the present embodiment is provided with a stabilizer. When a photographer films during motion with the electric toy car, he/she only needs to focus on controlling the electric toy car to move in various directions, such that the smartphone can capture images in various directions stably. On one hand, stability of image capturing can be assured, and on the other hand, safety of a photographer can be assured. In addition, photographer may control the electric toy car, the cloud platform 4 or the wireless communication device 6 to move or rotate remotely by a remote control, to actuate the smartphone to move or rotate. In such a way, an image capturing in various directions or a remote filming of the photographer himself/herself can be implemented.

### FIFTH EMBODIMENT

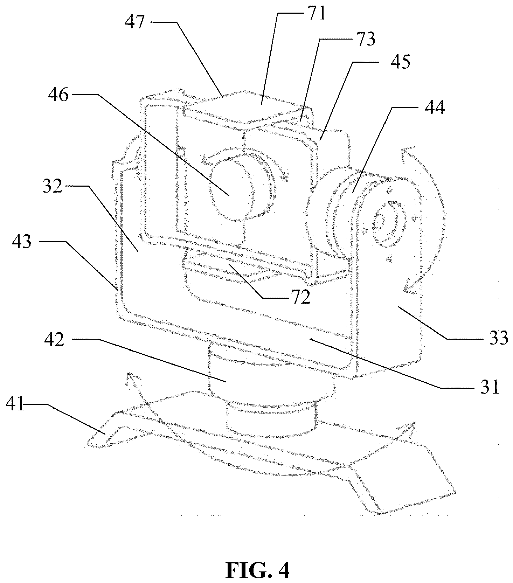

An embodiment of the present disclosure provides a cloud platform. The cloud platform can be applied to a device moving on ground, for example, a balance vehicle, or the cloud platform can be applied to a space flight device, for example, a drone. As illustrated in FIG. 4, the cloud platform 4 includes a base 41, a pitch rotation mechanism, a roll rotation mechanism and a yaw rotation mechanism. The yaw rotation mechanism is disposed on the base 41. The roll rotation mechanism is connected to the yaw rotation mechanism via the pitch rotation mechanism. Here, the yaw rotation mechanism will actuate the pitch rotation mechanism and the roll rotation mechanism to rotate in a yaw direction when the yaw rotation mechanism rotates in the yaw direction. The pitch rotation mechanism will actuate the roll rotation mechanism to rotate in a pitch direction when the pitch rotation mechanism rotates in the pitch direction. The roll rotation mechanism is rotatable in a roll direction relative to the pitch rotation mechanism.

As for the yaw rotation mechanism, in a specific embodiment, the yaw rotation mechanism includes a yaw support 43 and a yaw axle 42. Here, the yaw support 43 is connected to the base 41 via the yaw axle 42, and the yaw support 43 rotates in the yaw direction by using the yaw axle 42 as a rotation axle. The pitch rotation mechanism is disposed on the yaw support 43. Further, in a specific embodiment, the yaw support 43 includes a first connection portion 31, a second connection portion 32, and a third connection portion 33. The first connection portion 31 is connected to the yaw axle 42. The second connection portion 32 is connected to one side of the first connection portion 31 and the third connection portion 33 is connected to the other side of the first connection portion 31, and the second connection portion 32 and the third connection portion 33 are located on a same side of the first connection portion 31, so as to form a pitch space for accommodating the pitch rotation mechanism. Here, the pitch rotation mechanism is disposed in the pitch space. Specifically, the first connection portion 31, the second connection portion 32 and the third connection portion 33 can be formed by one-piece molding. Moreover, a U-shaped support may be used as the yaw support 43.

As for the pitch rotation mechanism, in a specific embodiment, the pitch rotation mechanism includes a pitch support 45 and a pitch axle 44. Here, the pitch axle 44 is disposed on the yaw rotation mechanism and perpendicular to a plane in which the pitch direction is. The pitch support 45 is connected to the pitch axle 44. The pitch support 45 rotates in the pitch direction by using the pitch axle 44 as a rotation axle. The roll rotation mechanism is disposed on the pitch support 45. Further, in a specific embodiment, the pitch rotation mechanism includes two pitch axles 44. These two pitch axles 44 are disposed at both ends of the pitch support 45 respectively. The pitch support 45 is connected to the yaw rotation mechanism via the two pitch axles 44. The problem that the strength of single cantilever is weak can be solved by disposing two pitch axles 44 in the cloud platform and connecting the pitch support 45 to the yaw rotation mechanism via the two pitch axles 44, which can improve the supporting strength of the yaw rotation mechanism for the pitch support 45 and can improve stability of the pitch rotation mechanism.

As for the roll rotation mechanism, in a specific embodiment, the roll rotation mechanism includes a roll support 47 and a roll axle 46. Here, the roll axle 46 is connected to the roll support 47, and the pitch rotation mechanism is clamped by the roll support 47. Specifically, the pitch support 45 is clamped by the roll support 47 and the roll axle 46 is rotatable in the roll direction relative to the roll support 47. Further, in a specific embodiment, the roll support 47 includes a first clamping portion 714, a second clamping portion 72 and a fourth connection portion 73. The first clamping portion 7471 is connected to the second clamping portion 72 via the fourth connection portion 73, and the first clamping portion 7471 and the second clamping portion 72 are located on a same side of the fourth connection portion 73. The first clamping portion 7471 and the second clamping portion 72 cooperate to clamp the pitch support 45, and the roll axle 46 is disposed on the fourth connection portion 73. Specifically, the roll support 47 also can be implemented by a U-shaped support. The fourth connection portion 73 is provided with a center hole in the center of the fourth connection portion. The dimension of the center hole is adapted to the roll axle 46, and the roll axle 46 passes through the center hole.

Further, in the present disclosure, a first operation device is disposed on the pitch rotation mechanism. The first operation device includes a display screen. Specifically, the first operation device may be a display device that is provided with a display screen, for example, a tablet computer, a display or the like. A second operation device is disposed on the roll rotation mechanism. The second operation device includes an image capturing device. Specifically, the second operation device may be an image capturing means that is provided with an image capturing device, for example, a GoPro, a mobile phone or the like.

On the basis of a same concept, an embodiment of the present disclosure also provides a robot head. The robot head includes the cloud platform according to the embodiments as described above. The first operation device may be used as a face of the robot by disposing on the pitch rotation mechanism in the cloud platform the first operation device having a display screen. The second operation device may be used as eyes of the robot by disposing on the roll rotation mechanism in the cloud platform the second operation device provided with image capturing devices. In the case of robot head, movement of the yaw axle will actuate the pitch axle and the roll axle, to simulate left and right rotation of the robot head; movement of the pitch axle will actuate the roll axle, to simulate upward and downward rotation of the robot face; and movement of the roll axle will actuate the image capturing device (for example, a camera) to rotate, to simulate turning of the robot eyes.

It is noted that the robot head may be a head of a ground moving robot, or a head of a free flying space robot.

The cloud platform according to the fifth embodiment can be disposed on body of the robot by the base 41. In the case of a ground moving robot of which a movement chassis is a balance vehicle, the body of the robot can also function as a control component for controlling the movement of the ground moving robot. For example, the body of the robot can function as a control level for controlling steering of the robot. Here, the base 41 corresponds to the fixing support 3 in the first embodiment of the present disclosure. Alternatively, the base 41 is fixed on the fixing support 3 in the first embodiment of the present disclosure, and the body of the robot corresponds to the stabilizer-carrying assembly 2 in the first embodiment of the present disclosure.

The technical solutions according to the above embodiments of the present disclosure at least have technical effects or advantages as follows.

The cloud platform according to the present disclosure includes a base, a pitch rotation mechanism, a roll rotation mechanism and a yaw rotation mechanism. The yaw rotation mechanism is disposed on the base. Due to connection of the pitch rotation mechanism to the yaw rotation mechanism by the roll rotation mechanism, when the yaw rotation mechanism rotates in a yaw direction, the yaw rotation mechanism actuates the pitch rotation mechanism and the roll rotation mechanism to rotate in the yaw direction; when the pitch rotation mechanism rotates in a pitch direction, the pitch rotation mechanism actuates the roll rotation mechanism to rotate in the pitch direction; and the roll rotation mechanism is rotatable in a roll direction relative to the pitch rotation mechanism. As such, independent rolling of the roll rotation mechanism is implemented. That is to say, when the roll rotation mechanism rotates in the roll direction, the roll rotation mechanism will not actuate the pitch rotation mechanism to rotate, and also will not actuate the yaw rotation mechanism to rotate.

In the embodiments of the present disclosure, it is to be understood that the electric motor control method of the electric vehicle, the electric motor control device and the electric vehicle disclosed can be implemented by other ways. The abovementioned device embodiments are only schematic. For example, the dividing for the unit is only a logical function dividing, and other dividing manners may be assumed in practice. For example, multiple units or assemblies can be combined or integrated into another system, or some features can be omitted or skipped. Furthermore, coupling, direct coupling, communication link among the various components illustrated or discussed may be indirect coupling or communication link via some interfaces, devices or units those may be electrical, mechanical or of other forms.

The above units described as separated components may be physically separated or not, and the components illustrated as units may be physical units or not, that is to say, may be located in one position or distributed into multiple network units; a part of or all units can be selected according to actual requirement to implement the purposes of solutions of the embodiments.

Although preferred embodiments of the present disclosure have been described, other changes or modifications may be made to these embodiments once the basic creative concept is known by those skilled in the art. Therefore, the claims appended are intended to be construed as including the preferred embodiments and all changes and modifications falling within the scope of the present disclosure.

It is apparent that various modifications and variants can be made to the present disclosure by those skilled in the art without departing from the spirit and the scope of the present disclosure. Thus, when these modifications and variants to the present disclosure fall within the scope of the claims of the present disclosure or equivalent technique thereof, the present disclosure is intended to incorporate these modifications and variants.

## Claims

1. A device moving on ground, comprising a stabilizer-carrying assembly and a stabilizer disposed on the stabilizer-carrying assembly, the stabilizer comprising:
a fixing support having a first connection portion connected to a first connection portion of the stabilizer-carrying assembly; and
a cloud platform having a first connection portion connected to a second connection portion of the fixing support.

2. The device of claim 1, wherein the stabilizer further comprises:
an image capturing device disposed at a second connection portion of the cloud platform.

3. The device of claim 1, wherein the stabilizer further comprises:
a wireless communication device disposed at a third connection portion of the fixing support.

4. The device of claim 3, wherein the wireless communication device comprises a signal transmitter and a signal receiver.

5. The device of claim 3, wherein the stabilizer further comprises:
an electric motor connected to the wireless communication device.

6. The device of claim 3, wherein the wireless communication device comprises an ultra wide band (UWB) device.

7. The device of any one of claims 1-6, wherein the stabilizer-carrying assembly functions as a movement control component for the device moving on ground, and the movement control component is a control component for controlling movement of the device moving on ground.

8. The device of claim 7, wherein the movement control component is a steering joystick which is a control component for controlling steering of the device moving on ground.

9. The device of claim 8, wherein the steering joystick is a joystick which is controllable by a leg or a joystick which is controllable by a hand.

10. A stabilizer applied to a device moving on ground, wherein the device has a stabilizer-carrying assembly, and the stabilizer is disposed on the stabilizer-carrying assembly, the stabilizer comprising:
a fixing support having a first connection portion connected to a first connection portion of the stabilizer-carrying assembly; and
a cloud platform having a first connection portion connected to a second connection portion of the fixing support.

11. A cloud platform comprising a base, a pitch rotation mechanism, a roll rotation mechanism and a yaw rotation mechanism, wherein
the yaw rotation mechanism is disposed on the base; and
the roll rotation mechanism is connected to the yaw rotation mechanism via the pitch rotation mechanism;
and wherein when the yaw rotation mechanism rotates in a yaw direction, the yaw rotation mechanism actuates the pitch rotation mechanism and the roll rotation mechanism to rotate in the yaw direction, and when the pitch rotation mechanism rotates in a pitch direction, the pitch rotation mechanism actuates the roll rotation mechanism to rotate in the pitch direction, and the roll rotation mechanism is rotatable in a roll direction relative to the pitch rotation mechanism.

12. The cloud platform of claim 11, wherein the yaw rotation mechanism comprises a yaw support and a yaw axle;
the yaw support is connected to the base via the yaw axle, and the yaw axle functions as a rotation axle of the yaw support when the yaw support rotates in the yaw direction; and
the pitch rotation mechanism is disposed on the yaw support.

13. The cloud platform of claim 12, wherein the yaw support comprises a first connection portion, a second connection portion, and a third connection portion;
the first connection portion is connected to the yaw axle; and
the second connection portion is connected to one end of the first connection portion and the third connection portion is connected to the other end of the first connection portion, and the second connection portion and the third connection portion are located on a same side of the first connection portion, so as to form a pitch space for accommodating the pitch rotation mechanism, and the pitch rotation mechanism is disposed in the pitch space.

14. The cloud platform of claim 11, wherein the pitch rotation mechanism comprises a pitch support and a pitch axle;
the pitch axle is disposed on the yaw rotation mechanism and is perpendicular to a plane in which the pitch direction is located;
the pitch support is connected to the pitch axle, and the pitch axle functions as a rotation axle of the pitch support when the pitch support rotates in the pitch direction; and
the roll rotation mechanism is disposed on the pitch support.

15. The cloud platform of claim 14, wherein the yaw rotation mechanism comprises two pitch axles;
one of the two pitch axles is disposed at one end of the pitch support and other one of the two pitch axels is disposed at other end of the pitch support; and
the pitch support is connected to the yaw rotation mechanism via the two pitch axles.

16. The cloud platform of claim 11, wherein the roll rotation mechanism comprises a roll support and a roll axle; and
the roll axle is connected to the roll support, and the pitch rotation mechanism is clamped by the roll support, the roll axle is rotatable in a roll direction relative to the roll support.

17. The cloud platform of claim 16, wherein the roll support comprises a first clamping portion, a second clamping portion and a fourth connection portion;
the first clamping portion is connected to the second clamping portion via the fourth connection portion, and the first clamping portion and the second clamping portion are located on a same side of the fourth connection portion;
the first clamping portion and the second clamping portion cooperate to clamp the pitch rotation mechanism; and
the roll axle is disposed on the fourth connection portion.

18. The cloud platform of claim 11, wherein a first operation device comprising a display is disposed on the pitch rotation mechanism.

19. The cloud platform of claim 11, wherein a second operation device comprising an image capturing device is disposed on the roll rotation mechanism.

20. A robot head comprising the cloud platform of any one of claims 11-19.
